# EUROPEAN PATENT APPLICATION

(11) **EP 3 716 222 A1**
(43) Date of publication of application: **30.09.2020**
(21) Application number: 19811707.9
(22) Date of filing: 21.02.2019
(51) Int. Cl.: G07B 15/02

(54) **PARKING FEE COLLECTION METHOD AND APPARATUS AND ELECTRONIC DEVICE**

(30) Priority: 31.05.2018 CN 201810556570
(71) Applicant: ALIBABA GROUP HOLDING LIMITED, George Town, Grand Cayman (KY)
(72) Inventor: JIANG, Guofei, Hangzhou, Zhejiang 311121 (CN)
(74) Representative: Goddar, Heinz J.
(86) International application number: PCT/CN2019/075747
(87) International publication number: WO 2019/227982

(57) **Abstract**

One or more implementations of the present specification provide a parking fee collection method, apparatus, and an electronic device, applied to a parking fee collection system. The method includes the following: obtaining vehicle information of a parked vehicle in a parking space, where the vehicle information has a corresponding user account on a payment platform; and initiating a payment collection request for the vehicle information to the payment platform each time a parking time period of the parked vehicle in the parking space reaches a first predetermined time period, to collect an asset corresponding to the first predetermined time period.

## Description

### TECHNICAL FIELD

One or more implementations of the present specification relate to the field of vehicle management technologies, and in particular, to parking fee collection methods, apparatuses, and electronic devices.

### BACKGROUND

A parking lot can provide a fee-based parking service to a user. The user needs to make a corresponding amount of payment to the parking lot based on a parking time period of a vehicle in a parking space, for the management and maintenance of the parking lot. Therefore, the parking time period of the vehicle needs to be calculated in a certain method, so that the user is charged a corresponding parking fee.

### SUMMARY

In view of this, one or more implementations of the present specification provide parking fee collection methods, apparatuses, and electronic devices.

To achieve the previous objective, the one or more implementations of the present specification provide the following technical solutions:

A first aspect of the one or more implementations of the present specification provides a parking fee collection method, applied to a parking fee collection system, where the method includes the following: obtaining vehicle information of a parked vehicle in a parking space, where the vehicle information has a corresponding user account on a payment platform; and initiating a payment collection request for the vehicle information to the payment platform each time a parking time period of the parked vehicle in the parking space reaches a first predetermined time period, to collect an asset corresponding to the first predetermined time period.

A second aspect of the one or more implementations of the present specification provides a parking fee collection method, applied to a parking fee collection system, where the method includes the following: obtaining vehicle information of a parked vehicle in a parking space, where the vehicle information has a corresponding user account on a payment platform; and when it is detected that the parked vehicle leaves the parking space, initiating a payment collection request for the vehicle information to the payment platform based on a parking time period of the parked vehicle in the parking space, to collect an asset corresponding to the parking time period.

A third aspect of the one or more implementations of the present specification provides a parking fee collection apparatus, applied to a parking fee collection system, where the apparatus includes the following: an acquisition unit, configured to obtain vehicle information of a parked vehicle in a parking space, where the vehicle information has a corresponding user account on a payment platform; and a collection unit, configured to initiate a payment collection request for the vehicle information to the payment platform each time a parking time period of the parked vehicle in the parking space reaches a first predetermined time period, to collect an asset corresponding to the first predetermined time period.

A fourth aspect of the one or more implementations of the present specification provides a parking fee collection apparatus, applied to a parking fee collection system, where the apparatus includes the following: an acquisition unit, configured to obtain vehicle information of a parked vehicle in a parking space, where the vehicle information has a corresponding user account on a payment platform; and a collection unit, configured to: when it is detected that the parked vehicle leaves the parking space, initiate a payment collection request for the vehicle information to the payment platform based on a parking time period of the parked vehicle in the parking space, to collect an asset corresponding to the parking time period.

A fifth aspect of the one or more implementations of the present specification provides an electronic device, including the following: a processor; and a memory, configured to store a processor-executable instruction, where the processor is configured to perform the method described in any one of the previous implementations.

### BRIEF DESCRIPTION OF DRAWINGS

FIG. 1 is a schematic architectural diagram illustrating a parking fee collection management system, according to an example implementation;
FIG. 2 is a flowchart illustrating a parking fee collection method, according to an example implementation;
FIG. 3 is a flowchart illustrating another parking fee collection method, according to an example implementation;
FIG. 4 is a schematic interaction diagram illustrating parking lot automatic fee collection, according to an example implementation 1;
FIG. 5 is a schematic interaction diagram illustrating another type of parking lot automatic fee collection, according to an example implementation 1;
FIG. 6 is a schematic interaction diagram illustrating parking lot automatic fee collection, according to an example implementation 2;
FIG. 7 is a schematic interaction diagram illustrating another type of parking lot automatic fee collection, according to an example implementation 2;
FIG. 8 is a schematic structural diagram illustrating a device, according to an example implementation;
FIG. 9 is a block diagram illustrating a parking fee collection apparatus, according to an example implementation;
FIG. 10 is a block diagram illustrating another parking fee collection apparatus, according to an example implementation.

### DESCRIPTION OF IMPLEMENTATIONS

Example implementations are described in detail here, and examples of the example implementations are presented in the accompanying drawings. When the following description relates to the accompanying drawings, unless specified otherwise, the same numbers in different accompanying drawings represent same or similar elements. Implementations described below do not represent all implementations consistent with one or more implementations of the present specification. On the contrary, the implementations are only examples of apparatuses and methods that are described in the appended claims in detail and consistent with some aspects of one or more implementations of the present specification.

It is worthwhile to note that in other implementations, steps of a corresponding method are not necessarily performed according to the sequence shown and described in the present specification. In some other implementations, the method can include more or less steps than those described in the present specification. In addition, a single step described in the present specification may be divided into a plurality of steps in other implementations for description. However, a plurality of steps described in the present specification may also be combined into a single step for description in other implementations.

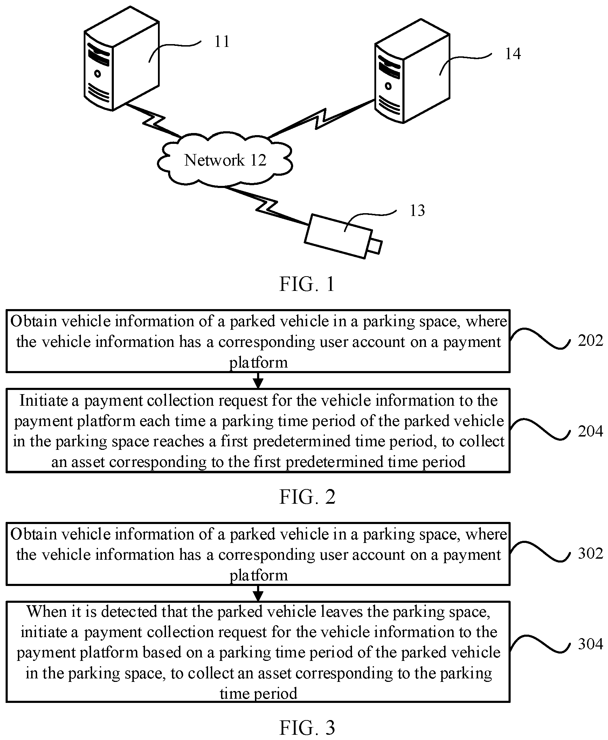

FIG. 1 is a schematic architectural diagram illustrating a parking fee collection management system, according to an example implementation. As shown in FIG. 1, the system can include a parking fee collection server 11, a network 12, an Internet of Things device 13, and a payment platform server 14.

The parking fee collection server 11 can be a physical server including an independent host, or the parking fee collection server 11 can be a virtual server including a host cluster. In a running process, the parking fee collection server 11 can run and be implemented as a parking fee collection system. When a user parks a vehicle in a parking lot managed by the parking fee collection system, the parking fee collection system is configured to perform parking fee collection on the user.

The Internet of Things device 13 can be implemented as at least one of the following types of electronic devices: a monitoring device, a radio frequency identification (RFID) reader, a Bluetooth device, an optical sensor, a signal receiver, etc. Implementations are not limited in one or more implementations of the present specification. The Internet of Things device 13 is configured to collect information about a parked vehicle in the parking lot, and provide the collected vehicle information to the parking fee collection server 11.

The payment platform server 14 can be a physical server including an independent host, or the payment platform server 14 can be a virtual server including a host cluster. In a running process, the payment platform server 14 can run and be implemented as a payment platform. When a user and the parking fee collection system each have a registered account on the payment platform, the parking fee collection system can initiate a request to the payment platform, so that the payment platform automatically transfers an asset from an account corresponding to the user to an account corresponding to the parking fee collection system.

The network 12 for interaction between the parking fee collection server 11, the Internet of Things device 13, and the payment platform server 14 can include multiple types of wired or wireless networks. In an implementation, the network 12 can include a public switched telephone network (PSTN) and the Internet. Implementations are not limited in the present specification, certainly.

FIG. 2 is a flowchart illustrating a parking fee collection method, according to an example implementation. As shown in FIG. 2, the method is applied to a parking fee collection system (e.g., included in the parking fee collection server 11 shown in FIG. 1), and can include the following steps.

Step 202: Obtain vehicle information of a parked vehicle in a parking space, where the vehicle information has a corresponding user account on a payment platform.

In an implementation, an information acquisition operation can be performed at the parking space by using a first Internet of Things device associated with the parking fee collection system, and the vehicle information of the parked vehicle can be determined based on information obtained by the first Internet of Things device. The first Internet of Things device includes at least one of the following: a monitoring device, an RFID reader, a Bluetooth device, an optical sensor, a signal receiver, etc. Implementations are not limited in the present specification.

For example, when the first Internet of Things device includes a monitoring device, the monitoring device can perform image photographing on the parking space, and determine the vehicle information of the parked vehicle by performing content analysis on a photographed image.

For example, when the first Internet of Things device includes an RFID reader, the RFID reader can read an RFID signal transmitted by an RFID tag installed on the parked vehicle, and the RFID signal can include the vehicle information of the parked vehicle.

For example, when the first Internet of Things device includes a first Bluetooth device, the Bluetooth device can read a Bluetooth signal sent by a second Bluetooth device installed on the parked vehicle, and the Bluetooth signal can include the vehicle information of the parked vehicle.

For example, when the first Internet of Things device includes an optical sensor, the surface of the parked vehicle can be coated with an optical medium of a predetermined material. The optical medium is used to preserve appearance of the parked vehicle, and the optical sensor can scan the parked vehicle, so as to obtain body surface structure data of the parked vehicle, and use the body surface structure data as the vehicle information of the parked vehicle. The optical medium can be a nano-optical film. After the nano-optical film is coated on an outer surface of the vehicle, a piece of nano-optical film can be formed, to automatically preserve the vehicle appearance. Accordingly, the optical sensor can be configured to capture light of a specific wavelength generated or reflected by the optical film, so as to accurately generate the body surface structure data of the vehicle.

For example, when the first Internet of Things device includes a signal receiver, the surface of the parked vehicle can be coated with an electrical medium of a predetermined material. The electrical medium is used to preserve appearance of the parked vehicle, and the signal receiver can scan the parked vehicle, so as to obtain body surface structure data of the parked vehicle, and use the body surface structure data as the vehicle information of the parked vehicle. The electrical medium can be a carbon structural material of a nanometer level. After the carbon structural material is coated on an outer surface of the vehicle, a circuit layer that encloses the vehicle can be formed. The circuit layer can generate an electrical signal uniquely corresponding to the body surface structure data, and send the electrical signal to the signal receiver, so that the electrical signal is used as the vehicle information of the parked vehicle.

In an implementation, the first Internet of Things device can be dedicated to the parking space. In other words, a corresponding first Internet of Things device is configured for each parking space. For example, a corresponding RFID reader is installed on or near each parking space, and only when a vehicle enters a corresponding parking space, the RFID reader can collect an RFID signal transmitted by an RFID tag installed on the vehicle. In another implementation, the first Internet of Things device can be used for the parking space and at least one other parking space. In other words, multiple parking spaces can share one first Internet of Things device. For example, if a camera of a monitoring device faces multiple parking spaces, so that an image photographed by the monitoring device covers the parking spaces, information about vehicles parked in the parking spaces can be collected based on the photographed image collected by the camera, so as to obtain corresponding vehicle information.

In an implementation, when it is determined that there is a parked vehicle in the parking space by using the first Internet of Things device, an information acquisition operation can be further performed on the parked vehicle by using the first Internet of Things device. In other words, the first Internet of Things device can be used to determine that there is a parked vehicle in the parking space, and can also obtain vehicle information of the parked vehicle. For example, when the first Internet of Things device includes a monitoring device, a photographed image collected by the monitoring device can be used to identify a use status of the parking space (i.e., whether there is a vehicle parked in the parking space), and can also be used to identify vehicle information of the parked vehicle in the parking space (e.g., identify a license plate number of the parked vehicle).

In an implementation, when it is determined that there is a parked vehicle in the parking space by using a second Internet of Things device associated with the parking fee collection system, an information acquisition operation can be further performed on the parked vehicle by using the first Internet of Things device. In other words, the second Internet of Things device is used to determine that there is a parked vehicle in the parking space, and the first Internet of Things device is used to obtain vehicle information of the parked vehicle. For example, the second Internet of Things device can include at least one of the following: underground induction coils, a range detection device, an infrared detection device, etc., and implementations are not limited in the present specification.

For example, when the second Internet of Things device includes underground induction coils, the underground induction coils can be installed under the ground of the parking space or at another location, so that the vehicle entering the parking space can trigger the underground induction coils. Further, the second Internet of Things device can directly trigger the first Internet of Things device, or trigger the first Internet of Things device by using the parking fee collection system, so that the first Internet of Things device obtains the vehicle information of the parked vehicle in the parking space.

For example, when the second Internet of Things device includes a range detection device, the range detection device can be installed above the parking space or at another location for detecting a distance with reference to the ground of the parking space, and the vehicle entering the parking space can trigger a change of a range detection result of the range detection device. Further, the second Internet of Things device can directly trigger the first Internet of Things device, or trigger the first Internet of Things device by using the parking fee collection system, so that the first Internet of Things device obtains the vehicle information of the parked vehicle in the parking space.

For example, when the second Internet of Things device includes an infrared detection device, the infrared detection device can be installed above or in front of the parking space or at another location, so that the vehicle entering the parking space can trigger the infrared detection device to generate a predetermined infrared detection result. Further, the second Internet of Things device can directly trigger the first Internet of Things device, or trigger the first Internet of Things device by using the parking fee collection system, so that the first Internet of Things device obtains the vehicle information of the parked vehicle in the parking space.

In an implementation, the vehicle information can include any information used to represent a vehicle identity, and implementations are not limited in the present specification. For example, the vehicle information can include at least one of the following: a license plate number, a paint color, a vehicle model, body surface structure data, vehicle driver information, vehicle passenger information, etc. Implementations are not limited in the present specification.

Step 204: Initiate a payment collection request for the vehicle information to the payment platform each time a parking time period of the parked vehicle in the parking space reaches a first predetermined time period, to collect an asset corresponding to the first predetermined time period.

In an implementation, a parking time period of the parked vehicle in the parking space is counted cyclically, and the payment collection request is initiated to the payment platform each time the first predetermined time period is reached, so that a corresponding parking fee can be collected stage by stage when the parked vehicle is parked in the parking space. Therefore, after a driver drives the parked vehicle away from the parking space, payment operations, including both a payment operation proactively performed by the driver and a payment operation automatically triggered by the parking fee collection system for the payment platform, on the parking fee are not triggered. Actually, a certain delay may be caused due to processes such as data processing and data transmission even in the payment operation automatically triggered by the parking fee collection system. Therefore, according to the technical solution of the present specification, situations that the delay occurs in the process of driving the parked vehicle away can be reduced, and the process that the parked vehicle leaves a parking lot is not interrupted, so that persons (e.g., the driver and passengers) in the vehicle are insensible to the payment process of the parking fee, thereby enhancing user experience.

In an implementation, after the parked vehicle in the parking space is detected, a parking time period of the parked vehicle in the parking space can start to be recorded. When the parking time period of the parked vehicle in the parking space reaches the first predetermined time period, the parking fee collection system can initiate the payment collection request for the vehicle information to the payment platform. After the asset corresponding to the first predetermined time period is collected, the parking fee collection system can reset the parking time period to recalculate the parking time period. Based on the previous method, the parking time period of the parked vehicle in the parking space can be counted cyclically, so that a corresponding parking fee is collected stage by stage in the parking process. Certainly, in addition to the resetting processing for the parking time period, the parking time period can be counted cyclically by using another method. Methods are not limited in the present specification.

In an implementation, a value of the first predetermined time period can be set based on needs, for example, 30 minutes, 15 minutes, 5 minutes, 1 minute, 10 seconds, or 1 second. The first predetermined time period is set as small as possible, for example, 1 second, so that even a similar effect and feeling of "real-time fee collection" can be generated. As such, the parking fee of the parked vehicle can be calculated and collected more accurately.

In an implementation, the collected asset corresponding to the first predetermined time period comes from the user account corresponding to the vehicle information on the payment platform. For example, the payment platform can directly transfer the corresponding asset from the user account to an account of the parking fee collection system on the payment platform.

In an implementation, when a limit of credit of the user account is not exceeded, the collected asset corresponding to the first predetermined time period comes from a credit asset related to the user account. For example, the payment platform can transfer a corresponding asset from an account of the payment platform to an account of the parking fee collection system on the payment platform, regardless of whether the user account has sufficient assets. Subsequently, an owner of the user account can transfer the asset paid in advance by the payment platform to the account of the payment platform at any time within a predetermined time period. Otherwise, the owner needs to transfer more assets to the account of the payment platform after the predetermined time period expires, and the amount of assets is positively correlated with a quantity of days after expiration, which is equivalent to transferring a fine or an interest to the payment platform.

In an implementation, any type of asset such as cash, a security, or a blockchain asset can be used to pay the parking fee in the present specification, and implementations are not limited in the present specification.

In an implementation, the parking fee can dynamically change. For example, a parking fee within 30 minutes or more than 6 hours is 0 Yuan, and a parking fee between 30 minutes and 6 hours is 10 Yuan/hour. Therefore, a total parking time period of the parked vehicle in the parking lot in which the parking space is located can be counted. Then, the payment collection request is initiated to the payment platform based on a fee collection criterion corresponding to a time period range within which the total parking time period falls.

In an implementation, when the parked vehicle leaves the parking space, it can be presumed that the parked vehicle certainly intends to leave the parking lot, and therefore, the total parking time period can be reset to terminate the current service for the parked vehicle. Certainly, it can be determined whether the parked vehicle intends to leave the parking lot more accurately in another way. Implementations are not limited in the present specification. For example, when the parked vehicle leaves the parking space and is not parked in any parking space in the parking lot within second predetermined time period, it can be presumed that the parked vehicle certainly intends to leave the parking lot, and the total parking time period can be reset. Certainly, the total parking time period can be reset when the parked vehicle leaves the parking lot.

In an implementation, in addition to the time period range within which the total parking time period falls, the fee collection criterion may also be related to other factors. The factors are not limited in the present specification. For example, the fee collection criterion can be further related to a natural day type, and the natural day type can include a workday, a holiday, etc. For another example, the fee collection criterion can be further related to a time period in a natural day. For example, fee collection criterion 1 is used for 08:00 to 20:00, and fee collection criterion 2 is used for 20: 00 to 08:00 on the next day.

In an implementation, in the present specification, because the parking fee collection system can automatically collect a parking fee for a vehicle parked in the parking lot, no blocking facility needs to be disposed at an exit of the parking lot, so that the vehicle can smoothly leave without stopping. However, it needs to be ensured that a parking fee can be automatically collected by the parking fee collection system for each vehicle entering the parking lot; otherwise, some parking fees may be neglected. Therefore, when a vehicle travels to an entrance of the parking lot in which the parking space is located, an inquiry request can be initiated to the payment platform based on vehicle information of the vehicle. When it is determined that a user account corresponding to the vehicle information of the vehicle exists on the payment platform, it indicates that the parking fee collection system can automatically collect a parking fee for the vehicle based on the present specification, and therefore, can allow the vehicle to enter, so that the vehicle enters the parking lot; otherwise, the parking fee collection system denies the vehicle to enter.

FIG. 3 is a flowchart illustrating another parking fee collection method, according to an example implementation. As shown in FIG. 3, the method is applied to a parking fee collection system (e.g., included in the parking fee collection server 11 shown in FIG. 1), and can include the following steps.

Step 302: Obtain vehicle information of a parked vehicle in a parking space, where the vehicle information has a corresponding user account on a payment platform.

In an implementation, for step 302 and related descriptions, references can be made to step 202 and the related descriptions. Details are omitted here for simplicity.

Step 304: When it is detected that the parked vehicle leaves the parking space, initiate a payment collection request for the vehicle information to the payment platform based on a parking time period of the parked vehicle in the parking space, to collect an asset corresponding to the parking time period.

In an implementation, after the parked vehicle leaves the parking space, it takes some time for the vehicle to travel to an exit of a parking lot. Therefore, when it is detected that the parked vehicle leaves the parking space, the payment collection request is initiated to the payment platform, so that the parking fee collection system completes automatic fee collection of a parking fee in the process that the parked vehicle travels to the exit of the parking lot from the parking space. When the parked vehicle travels to the exit of the parking lot, collection of the parking fee is certainly completed. Therefore, the process that the parked vehicle leaves the parking lot is not interrupted, so that persons (e.g., a driver and passengers) in the vehicle are insensible to the payment process of the parking fee, thereby enhancing user experience.

In an implementation, the collected asset corresponding to the parking time period comes from the user account corresponding to the vehicle information on the payment platform. For example, the payment platform can directly transfer the corresponding asset from the user account to an account of the parking fee collection system on the payment platform.

In an implementation, when a limit of credit of the user account is not exceeded, the collected asset corresponding to the parking time period comes from a credit asset related to the user account. For example, the payment platform can transfer a corresponding asset from an account of the payment platform to an account of the parking fee collection system on the payment platform, regardless of whether the user account has sufficient assets. Subsequently, an owner of the user account can transfer the asset paid in advance by the payment platform to the account of the payment platform at any time within a predetermined time period. Otherwise, the owner needs to transfer more assets to the account of the payment platform after the predetermined time period expires, and the amount of assets is positively correlated with a quantity of days after expiration, which is equivalent to transferring a fine or an interest to the payment platform.

In an implementation, any type of asset such as cash, a security, or a blockchain asset can be used to pay the parking fee in the present specification, and implementations are not limited in the present specification.

In an implementation, the parking fee can dynamically change. For example, a parking fee within 30 minutes or more than 6 hours is 0 Yuan, and a parking fee between 30 minutes and 6 hours is 10 Yuan/hour. Therefore, the payment collection request can be initiated to the payment platform based on a fee collection criterion corresponding to a time period range within which the parking time period falls.

In an implementation, in addition to the time period range within which the parking time period falls, the fee collection criterion may also be related to other factors. The factors are not limited in the present specification. For example, the fee collection criterion can be further related to a natural day type, and the natural day type can include a workday, a holiday, etc. For another example, the fee collection criterion can be further related to a time period in a natural day. For example, fee collection criterion 1 is used for 08:00 to 20:00, and fee collection criterion 2 is used for 20: 00 to 08:00 on the next day.

In an implementation, in the present specification, because the parking fee collection system can automatically collect a parking fee for a vehicle parked in the parking lot, no blocking facility needs to be disposed at the exit of the parking lot, so that the vehicle can smoothly leave without stopping. However, it needs to be ensured that a parking fee can be automatically collected by the parking fee collection system for each vehicle entering the parking lot; otherwise, some parking fees may be neglected. Therefore, when a vehicle travels to an entrance of the parking lot in which the parking space is located, an inquiry request can be initiated to the payment platform based on vehicle information of the vehicle. When it is determined that a user account corresponding to the vehicle information of the vehicle exists on the payment platform, it indicates that the parking fee collection system can automatically collect a parking fee for the vehicle based on the present specification, and therefore, can allow the vehicle to enter, so that the vehicle enters the parking lot; otherwise, the parking fee collection system denies the vehicle to enter.

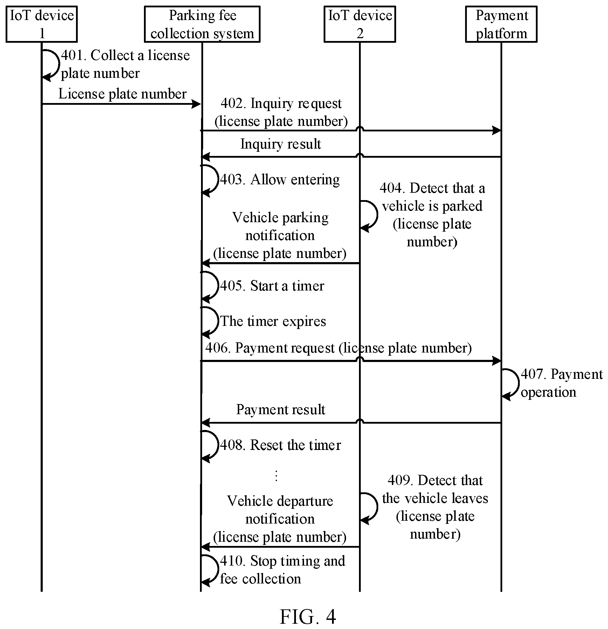

For ease of understanding, technical solutions of one or more implementations of the present specification are described by using "parking lot automatic fee collection" as an example. FIG. 4 is a schematic interaction diagram illustrating parking lot automatic fee collection, according to an example implementation 1. As shown in FIG. 4, assume that a parking fee collection system and an IoT device 1 and an IoT device 2 that are associated with the parking fee collection system are configured in a parking lot. The parking fee collection system can automatically collect a parking fee in cooperation with a payment platform based on detection data of the IoT device 1 and the IoT device 2. The interaction process of the parking lot automatic fee collection can include the following steps.

Step 401: The IoT device 1 collects a license plate number, and sends the license plate number to the parking fee collection system.

In an implementation, assume that the IoT device 1 is disposed at an entrance of the parking lot, and is configured to detect vehicle information of a vehicle that intends to enter the parking lot. For example, the vehicle information can include a license plate number.

In an implementation, the IoT device 1 can include any electronic device capable of collecting vehicle information of a vehicle. A license plate number is used as an example. For example, the IoT device 1 can be an image collection device, and an image collected by the image collection device for a vehicle can be used to identify the license plate number. For another example, the IoT device 1 can be an RFID reader, the RFID reader can read an RFID signal transmitted by an RFID tag installed on a vehicle, and the RFID signal can include a license plate number of the corresponding vehicle.

In an implementation, the IoT device 1 can use vehicle information of other types other than the license plate number, or combine the license plate number with vehicle information of other types, so as to reduce possible abnormal situations of vehicles, for example, "vehicle cloning", and prevent a loss to a cloned vehicle.

Step 402: The parking fee collection system sends an inquiry request to the payment platform, where the inquiry request includes the license plate number of the vehicle, and receives a query result returned by the payment platform.

Step 403: When the query result is that a user account corresponding to the license plate number exists on the payment platform, allow the corresponding vehicle to enter, so that the vehicle enters the parking lot.

In an implementation, a driver of the vehicle or another associated user needs to preset a corresponding user account on the payment platform, and binds the user account to the license plate number of the vehicle, etc. Based on a binding relationship between the user account and the license plate number, the payment platform can detect the license plate number provided by the parking fee collection system to determine whether the corresponding user account exists. For example, when the license plate number is " ABC123", assuming that the payment platform can identify that the bound user account is account 1, the payment platform can return a query result of "an account is bound"; or assuming that the payment platform does not identify a bound user account, the payment platform can return a query result of "no account is bound".

In an implementation, in the present specification, a parking fee of a vehicle is automatically collected by the parking fee collection system. Therefore, no blocking apparatus such as a parking barrier needs to be disposed at an exit of the parking lot, so that the vehicle can leave the parking lot directly and smoothly without staying at the exit for payment, etc. Therefore, through steps 401 to 403, before a vehicle enters the parking lot, it can be determined that the vehicle has a corresponding user account on the payment platform, so as to ensure that the vehicle can support the technical solution of the present specification and that the parking fee collection system can automatically collect a parking fee based on the user account. A vehicle that cannot support the technical solution of the present specification should be prohibited from entering because a parking fee cannot be collected for the related vehicle by the parking fee collection system and the vehicle cannot stay at the exit for payment. Therefore, the parking fee cannot be successfully collected.

Step 404: After detecting that a vehicle is parked in a parking space, the IoT device 2 sends a corresponding vehicle parking notification to the parking fee collection system, where the vehicle parking notification includes a license plate number of the related vehicle obtained by the IoT device 2.

In an implementation, the IoT device 2 can include any electronic device capable of detecting that a vehicle is parked in a parking space and obtaining a license plate number of the vehicle. Implementations are not limited in the present specification.

In an implementation, the IoT device 2 can be a monitoring device. The monitoring device can monitor one or more parking spaces in the parking lot. The monitoring device can analyze whether a vehicle is parked in a parking space by using a monitoring image, and analyze a license plate number of the vehicle from the monitoring image.

In an implementation, the IoT device 2 can be an RFID reader. One RFID reader can be disposed for each parking space in the parking lot, and an effective reading range of the RFID reader does not go beyond the corresponding parking space. Therefore, when a vehicle enters a parking space, only an RFID reader disposed at the parking space can activate an RFID tag on the vehicle. In this case, it can be detected that the vehicle is parked in the parking space. In addition, the RFID reader can read an RFID signal transmitted by the RFID tag, and the RFID signal can include a license plate number of the vehicle on which the RFID tag is located.

The "activating an RFID tag" refers to a situation that the RFID tag is of a passive type. In other situations, the RFID tag on the vehicle can be of an active type, so that the RFID tag can proactively transmit the RFID signal without being "activated". Transmit power of the RFID tag is limited and a transmit range of the RFID signal is controlled, so that the RFID reader can also determine that the vehicle is parked in the corresponding parking space based on the received RFID signal and determine the license plate number of the parked vehicle.

Step 405: The parking fee collection system starts a timer to record a parking time period of the related vehicle based on the vehicle parking notification sent by the IoT device 2.

In an implementation, assume that the license plate number included in the vehicle parking notification is "ABC123". In this case, the parking fee collection system can start corresponding timer 1 for "ABC123", and timer 1 is dedicated to recording a parking time period of the vehicle "ABC123".

In an implementation, timer 1 can have any predefined time period such as 1 hour, 30 minutes, 5 minutes, 1 minute, or 3 seconds. Implementations are not limited in the present specification.

Step 406: After the timer expires, the parking fee collection system initiates a payment request to the payment platform, where the payment request includes the license plate number of the related vehicle.

Step 407: The payment platform helps complete a payment operation of a parking fee based on the payment request initiated by the parking fee collection system.

In an implementation, assuming that a predetermined expiration time period of timer 1 is 1 minute, after timer 1 expires, the parking fee collection system can automatically initiate the payment request to the payment platform, and the payment request includes the license plate number "ABC123" corresponding to timer 1. In addition, the payment platform identifies that the bound user account is account 1 based on the license plate number "ABC123", so as to implement an automatic payment operation for account 1.

In an implementation, the parking fee collection system can include a payment amount in the payment request; or the parking fee collection system and the payment platform can pre-agree on a payment amount calculation rule, so that the payment platform can determine a payment amount based on the calculation rule.

In an implementation, the parking fee collection system has corresponding account 2 on the payment platform, and the payment platform can transfer a fund corresponding to the payment amount from account 1 corresponding to the license plate number "ABC123" to account 2, so as to complete automatic fee collection of the parking fee. In another implementation, if account 1 has a limit of credit on the payment platform, and the remaining limit of credit is not less than the payment amount, the payment platform can transfer the fund corresponding to the payment amount from an account of the payment platform (or another account such as a credit line dedicated account) to account 2, and deduct the payment amount from the limit of credit corresponding to account 1. In this case, even if remaining funds of account 1 are insufficient to pay the payment amount, the parking fee collection system can still collect the corresponding parking fee.

Step 408: When a received payment result is that the payment succeeds, the parking fee collection system controls the corresponding timer to reset.

In an implementation, assuming that the payment result indicates that the parking fee is successfully collected for the vehicle whose license plate number is "ABC123", and the parking fee collection system can reset timer 1 corresponding to "ABC123", so that the parking fee collection system recounts the parking time period of the vehicle "ABC123".

Therefore, in the process that the vehicle is parked in the parking space, steps 405 to 408 can be repeatedly triggered, so that the parking fee collection system cooperates with the payment platform, to collect the parking fee automatically, continually, and stage by stage until the vehicle leaves.

Step 409: After detecting that the vehicle leaves, the IoT device 2 sends a corresponding vehicle departure notification to the parking fee collection system, where the vehicle departure notification includes the license plate number of the related vehicle obtained by the IoT device 2.

In an implementation, the IoT device 2 can continuously detect the vehicle in the parking space to determine whether the vehicle leaves the parking space.

In an implementation, the IoT device 2 can be a monitoring device. The monitoring device can monitor one or more parking spaces in the parking lot. The monitoring device can analyze whether a vehicle leaves a parking space by using a monitoring image, and analyze a license plate number of the vehicle from the monitoring image.

In an implementation, the IoT device 2 can be an RFID reader. One RFID reader can be disposed for each parking space in the parking lot, and an effective reading range of the RFID reader does not go beyond the corresponding parking space. The RFID reader can perform a read operation based on a predetermined cycle, so that when a vehicle is parked in a parking space, an RFID tag on the vehicle can correspondingly send an RFID signal to the RFID reader. When the RFID reader cannot read an RFID signal in *n* consecutive (*n* is a predetermined value, e.g., n = 3) cycles, or when the RFID signal read by the RFID reader changes, it can be determined that the originally parked vehicle has left the corresponding parking space.

In an implementation, in step 404, the IoT device 2 can report parking space information of the parked vehicle (e.g., add a parking space number to the vehicle parking notification) to the parking fee collection system, so that the parking fee collection system can associate the parking space information with the license plate number. In addition, in step 409, the IoT device 2 can add corresponding parking space information only to the vehicle departure notification, so that the parking fee collection system determines an associated license plate number based on the parking space information.

Step 410: The parking fee collection system stops timing and fee collection for the parking time period of the vehicle that has left.

In an implementation, assuming that the license plate number included in the vehicle departure notification received by the parking fee collection system is "ABC123", the parking fee collection system can terminate timer 1 corresponding to "ABC123", so as to stop charging the vehicle "ABC123".

In an implementation, in the process that the vehicle "ABC 123" is parked in the parking space, the parking fee collection system has collected the corresponding parking fee in cooperation with the payment platform, and it has been verified in steps 401 to 403 that the vehicle "ABC123" can support the technical solution described in the present specification. Therefore, when the vehicle "ABC123" leaves the parking space, it is assumed by default that the parking fee is actually paid by the vehicle "ABC123". Therefore, the vehicle "ABC123" can directly leave from the exit of the parking lot, and there is no need to dispose any facility that may impede or hinder the driving, for example, a railing, at the exit. Therefore, it is ensured that the vehicle "ABC123" can leave from the exit of the parking lot smoothly and without interruption, thereby enhancing user experience and maintaining driving safety and driving order in the parking lot.

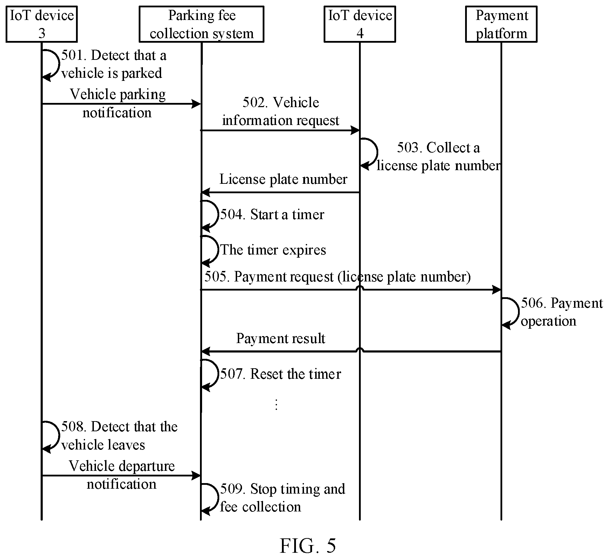

In the implementation shown in FIG. 4, the IoT device 1 is used to help determine whether a vehicle that intends to enter a parking lot can support the technical solution of the present specification, so that a parking fee is automatically paid, and the IoT device 2 is used to identify whether the vehicle is parked in a parking space and obtain vehicle information of the vehicle, so that the parking fee collection system can further automatically collect the parking fee based on a vehicle parking notification sent by the IoT device 2. In some situations, "identifying whether a vehicle is parked in a parking space" and "obtaining vehicle information of the vehicle" can be completed by different IoT devices. The following describes a corresponding implementation with reference to FIG. 5. FIG. 5 is a schematic interaction diagram illustrating another type of parking lot automatic fee collection, according to an example implementation 1. As shown in FIG. 5, assume that a parking fee collection system and an IoT device 3 and an IoT device 4 that are associated with the parking fee collection system are configured in a parking lot. The parking fee collection system can automatically collect a parking fee in cooperation with a payment platform based on detection data of the IoT device 3 and the IoT device 4. The interaction process of the parking lot automatic fee collection can include the following steps.

Step 501: When it is detected that a vehicle is parked in a parking space, the IoT device 3 sends a vehicle parking notification to the parking fee collection system.

In an implementation, the IoT device 3 can include any IoT device capable of sensing a vehicle parked in a parking space. Implementations are not limited in the present specification.

In an implementation, the IoT device 3 can include underground induction coils, and the underground induction coils can be installed under the ground of the parking space or at another location, so that the vehicle entering the parking space can trigger the underground induction coils.

In an implementation, the IoT device 3 can include a range detection device, the range detection device can be installed above the parking space or at another location for detecting a distance with reference to the ground of the parking space, and the vehicle entering the parking space can trigger a change of a range detection result of the range detection device.

In an implementation, the IoT device 3 can include an infrared detection device, the infrared detection device can be installed above or in front of the parking space or at another location, and the vehicle entering the parking space can trigger the infrared detection device to generate a predetermined infrared detection result.

In an implementation, the IoT device 3 can include a monitoring device. The monitoring device can monitor one or more parking spaces in the parking lot. The monitoring device can analyze whether a vehicle is parked in a parking space by using a monitoring image.

Step 502: The parking fee collection system initiates a vehicle information request to the IoT device 4.

In an implementation, IoT devices 3 can be in a one-to-one correspondence with parking spaces, so that after receiving a vehicle parking notification sent by any IoT device 3, the parking fee collection system can use a parking space corresponding to the IoT device 3 as a parking space in which a vehicle is parked.

In an implementation, the IoT device 3 can monitor multiple parking spaces at the same time. When it is detected that a vehicle is parked in a parking space, the IoT device 3 does not need to determine the exact parking space in which the vehicle is parked. After the parking fee collection system initiates the vehicle information request to the IoT device 4, the IoT device 4 can detect all parking spaces corresponding to the IoT device 3, and determine the parking space in which the vehicle is parked through analysis.

In an implementation, the IoT device 3 can monitor multiple parking spaces at the same time. When it is detected that a vehicle is parked in a parking space, the IoT device 3 can obtain identification information of the parking space, for example, a parking space number, include the identification information in a vehicle parking notification, and send the vehicle parking notification to the parking fee collection system, so that the parking fee collection system instructs the IoT device 4 to detect a parking space corresponding to the identification information, so as to identify a license plate number of the vehicle parked in the parking space.

Step 503: The IoT device 4 collects a license plate number, and notifies the parking fee collection system of the license plate number.

In an implementation, the IoT device 4 can include any electronic device capable of obtaining a license plate number of a vehicle parked in a parking space. Implementations are not limited in the present specification.

In an implementation, the IoT device 4 can be a monitoring device. The monitoring device can monitor at least some parking spaces monitored by the IoT device 3. The monitoring device can identify a license plate number of a vehicle through analysis on a monitoring image.

In an implementation, the IoT device 4 can be an RFID reader. A signal transceiving range of the RFID reader can cover at least some parking spaces monitored by the IoT device 3, so that when the IoT device 3 detects a vehicle parked in a parking space, the RFID reader can receive an RFID signal sent by an RFID tag installed on the vehicle, and read a license plate number of the vehicle included in the RFID signal.

Step 504: The parking fee collection system starts a timer to record a parking time period of the related vehicle based on the license plate number sent by the IoT device 4.

Step 505: After the timer expires, the parking fee collection system initiates a payment request to the payment platform, where the payment request includes the license plate number of the related vehicle.

Step 506: The payment platform helps complete a payment operation of a parking fee based on the payment request initiated by the parking fee collection system.

Step 507: When a received payment result is that the payment succeeds, the parking fee collection system controls the corresponding timer to reset.

In an implementation, for steps 504 to 507, references can be made to steps 405 to 408. Details are omitted here for simplicity.

Based on the previous steps, in the process that the vehicle is parked in the parking space, steps 504 to 507 can be repeatedly triggered, so that the parking fee collection system cooperates with the payment platform, to collect the parking fee automatically, continually, and stage by stage until the vehicle leaves.

Step 508: After detecting that the vehicle leaves, the IoT device 3 sends a corresponding vehicle departure notification to the parking fee collection system.

In an implementation, IoT devices 3 can be in a one-to-one correspondence with parking spaces, so that after receiving a vehicle departure notification sent by any IoT device 3, the parking fee collection system can determine that a vehicle parked in a parking space corresponding to the IoT device 3 has left.

In an implementation, the IoT device 3 can monitor multiple parking spaces at the same time. When it is detected that a vehicle leaves a parking space, the IoT device 3 does not need to determine the exact parking space from which the vehicle leaves. After the parking fee collection system initiates a vehicle information request (not shown in the figure) to the IoT device 4, the IoT device 4 can detect all parking spaces corresponding to the IoT device 3, and determine the parking space from which the vehicle leaves through analysis. The process is similar to the process of steps 502 and 503, and a difference only lies in that the vehicle departure process is described here whereas the vehicle parking process is described above.

In an implementation, the IoT device 3 can monitor multiple parking spaces at the same time. When it is detected that a vehicle leaves a parking space, the IoT device 3 can obtain identification information of the parking space, for example, a parking space number, include the identification information in a vehicle departure notification, and send the vehicle departure notification to the parking fee collection system, so that the parking fee collection system instructs the IoT device 4 to detect a parking space corresponding to the identification information, so as to identify a license plate number of the vehicle that leaves the parking space. The process is similar to the process of steps 502 and 503, and a difference only lies in that the vehicle departure process is described here whereas the vehicle parking process is described above.

Step 509: The parking fee collection system stops timing and fee collection for the parking time period of the vehicle that has left.

In an implementation, for the implementation shown in FIG. 5, capability verification can also be performed on a vehicle that intends to enter the parking lot through steps 401 to 403 in FIG. 4, so as to ensure that the vehicle can support the technical solution of the present specification. Details are omitted here for simplicity.

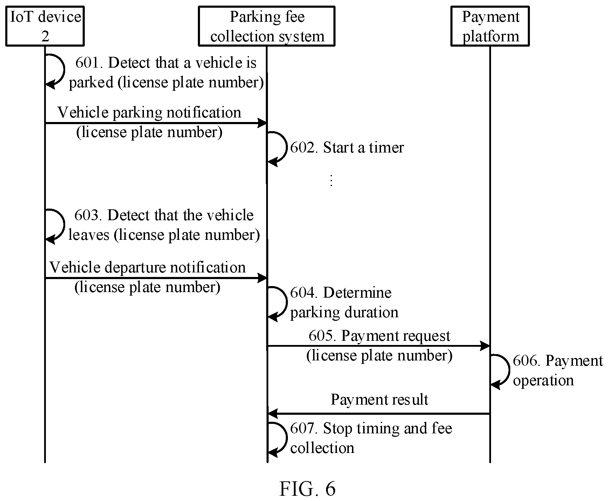

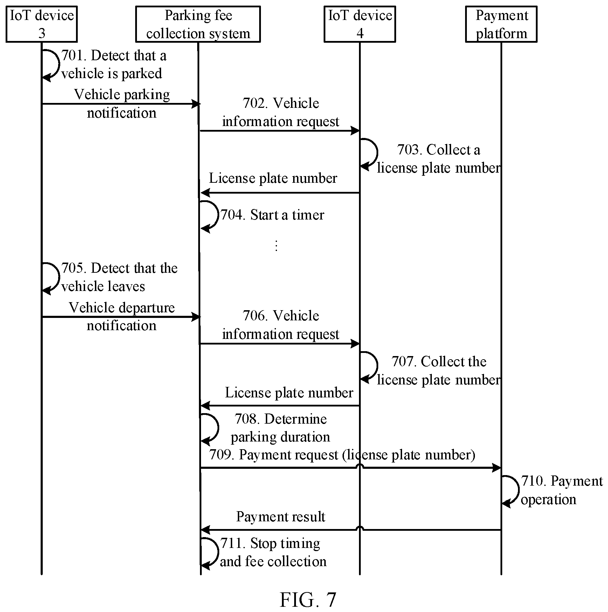

Based on the implementation shown in FIG. 4 or FIG. 5, in the process that a vehicle is parked in a parking space, the parking fee collection system cooperates with the payment platform to automatically collect a corresponding parking fee, so that after the vehicle leaves the parking space, it is assumed by default that the parking fee is paid for the vehicle. Therefore, the vehicle can directly leave from an exit of the parking lot, and there is no need to dispose any facility that may impede or hinder the driving, for example, a railing, at the exit. Therefore, it is ensured that the vehicle can leave from the exit of the parking lot smoothly and without interruption. In addition to fee collection in the parking process, because a certain time period is needed for a vehicle to travel from a parking space to the exit, a parking fee can be automatically paid by using the time period, and normal departure of the vehicle is not affected. The following provides detailed descriptions with reference to FIG. 6 and FIG. 7.

FIG. 6 is a schematic interaction diagram illustrating parking lot automatic fee collection, according to an example implementation 2. As shown in FIG. 6, assume that a parking fee collection system and an IoT device 2 associated with the parking fee collection system are configured in a parking lot. The parking fee collection system can automatically collect a parking fee in cooperation with a payment platform based on detection data of the IoT device 2. The interaction process of the parking lot automatic fee collection can include the following steps.

Step 601: After detecting that a vehicle is parked in a parking space, the IoT device 2 sends a corresponding vehicle parking notification to the parking fee collection system, where the vehicle parking notification includes a license plate number of the related vehicle obtained by the IoT device 2.

In an implementation, for step 601, references can be made to step 404 shown in FIG. 4. Details are omitted here for simplicity.

Step 602: The parking fee collection system starts a timer to record a parking time period of the related vehicle based on the vehicle parking notification sent by the IoT device 2.

In an implementation, assuming that a license plate number included in the vehicle parking notification is "ABC123", the parking fee collection system can start corresponding timer 1 for "ABC123", and timer 1 is dedicated to recording a parking time period of the vehicle "ABC123".

Step 603: After detecting that the vehicle leaves, the IoT device 2 sends a corresponding vehicle departure notification to the parking fee collection system, where the vehicle departure notification includes the license plate number of the related vehicle obtained by the IoT device 2.

In an implementation, for step 603, references can be made to step 409 shown in FIG. 4. Details are omitted here for simplicity.

Step 604: The parking fee collection system determines the parking time period of the vehicle.

In an implementation, after receiving the vehicle departure notification, the parking fee collection system can extract the license plate number included in the vehicle departure notification. For example, when the license plate number is "ABC123", the parking fee collection system can determine that the license plate number corresponds to timer 1, and use a counted time period of timer 1 as the parking time period of the vehicle "ABC123".

Step 605: The parking fee collection system initiates a payment request to the payment platform, where the payment request includes the license plate number and the parking time period/a payment amount of the related vehicle.

Step 606: The payment platform helps complete a payment operation of a parking fee based on the payment request initiated by the parking fee collection system.

In an implementation, the payment request initiated by the parking fee collection system includes the license plate number "ABC123" corresponding to timer 1, so that the payment platform identifies that a bound user account is account 1 based on the license plate number "ABC123", and performs an automatic payment operation for account 1.

In an implementation, the parking fee collection system can include the payment amount in the payment request; or the parking fee collection system and the payment platform can pre-agree on a payment amount calculation rule and the parking fee collection system adds the parking time period to the payment request, so that the payment platform can determine the corresponding payment amount based on the parking time period and the calculation rule.

In an implementation, the parking fee collection system has corresponding account 2 on the payment platform, and the payment platform can transfer a fund corresponding to the payment amount from account 1 corresponding to the license plate number "ABC123" to account 2, so as to complete automatic fee collection of the parking fee. In another implementation, if account 1 has a limit of credit on the payment platform, and the remaining limit of credit is not less than the payment amount, the payment platform can transfer the fund corresponding to the payment amount from an account of the payment platform (or another account such as a credit line dedicated account) to account 2, and deduct the payment amount from the limit of credit corresponding to account 1. In this case, even if remaining funds of account 1 are insufficient to pay the payment amount, the parking fee collection system can still collect the corresponding parking fee.

Step 607: When a received payment result returned by the payment platform is that the payment succeeds, the parking fee collection system stops timing and fee collection for the parking time period of the vehicle that has left.

In an implementation, assuming that the license plate number included in the vehicle departure notification received by the parking fee collection system is "ABC123", the parking fee collection system can terminate timer 1 corresponding to "ABC123", so as to stop charging the vehicle "ABC123".

In an implementation, in the process that the vehicle "ABC123" leaves the parking space and travels to an exit of the parking lot, the parking fee collection system has cooperated with the payment platform to collect the corresponding parking fee, so that the vehicle "ABC 123" can directly leave from the exit of the parking lot, and there is no need to dispose any facility that may impede or hinder the driving, for example, a railing, at the exit. Therefore, it is ensured that the vehicle "ABC123" can leave from the exit of the parking lot smoothly and without interruption, thereby enhancing user experience and maintaining driving safety and driving order in the parking lot.

In an implementation, steps 401 to 403 shown in FIG. 4 can also be applied to the implementation shown in FIG. 6. These operations can be performed before step 601, to verify whether the vehicle "ABC123" can support the technical solution of the present specification, so that the vehicle "ABC123" is allowed to enter the parking lot only when the vehicle is verified; otherwise, the vehicle is not allowed to enter. As such, the vehicle is prevented from directly leaving the parking lot without paying the parking fee after entering the parking lot.

In the implementation shown in FIG. 6, the IoT device 2 is configured to identify whether a vehicle is parked in or leaves a parking space and obtain vehicle information of the vehicle, so that the parking fee collection system can further automatically collect a parking fee based on a vehicle parking notification and a vehicle departure notification that are sent by the IoT device 2. In some situations, "identifying whether a vehicle is parked in or leaves a parking space" and "obtaining vehicle information of the vehicle" can be completed by different IoT devices. The following describes a corresponding implementation with reference to FIG. 7. FIG. 7 is a schematic interaction diagram illustrating another type of parking lot automatic fee collection, according to an example implementation 2. As shown in FIG. 7, assume that a parking fee collection system and an IoT device 3 and an IoT device 4 that are associated with the parking fee collection system are configured in a parking lot. The parking fee collection system can automatically collect a parking fee in cooperation with a payment platform based on detection data of the IoT device 3 and the IoT device 4. The interaction process of the parking lot automatic fee collection can include the following steps.

Step 701: When it is detected that a vehicle is parked in a parking space, the IoT device 3 sends a vehicle parking notification to the parking fee collection system.

Step 702: The parking fee collection system initiates a vehicle information request to the IoT device 4.

Step 703: The IoT device 4 collects a license plate number, and notifies the parking fee collection system of the license plate number.

In an implementation, for steps 701 to 703, references can be made to steps 501 to 503 shown in FIG. 5. Details are omitted here for simplicity.

Step 704: The parking fee collection system starts a timer to record a parking time period of the related vehicle based on the license plate number sent by the IoT device 4.

Step 705: After detecting that the vehicle leaves, the IoT device 3 sends a corresponding vehicle departure notification to the parking fee collection system.

Step 706: The parking fee collection system initiates a vehicle information request to the IoT device 4.

Step 707: The IoT device 4 collects the license plate number, and notifies the parking fee collection system of the license plate number.

In an implementation, the IoT device 3 can monitor multiple parking spaces at the same time. When it is detected that a vehicle leaves a parking space, the IoT device 3 does not need to determine the exact parking space from which the vehicle leaves. After the parking fee collection system initiates the vehicle information request to the IoT device 4, the IoT device 4 can detect all parking spaces corresponding to the IoT device 3, and determine the parking space from which the vehicle leaves through analysis. The process is similar to the process of steps 702 and 703, and a difference only lies in that the vehicle departure process is described here whereas the vehicle parking process is described above.

In an implementation, the IoT device 3 can monitor multiple parking spaces at the same time. When it is detected that a vehicle leaves a parking space, the IoT device 3 can obtain identification information of the parking space, for example, a parking space number, include the identification information in a vehicle departure notification, and send the vehicle departure notification to the parking fee collection system, so that the parking fee collection system instructs the IoT device 4 to detect a parking space corresponding to the identification information, so as to identify a license plate number of the vehicle that leaves the parking space. The process is similar to the process of steps 702 and 703, and a difference only lies in that the vehicle departure process is described here whereas the vehicle parking process is described above.

In an implementation, IoT devices 3 can be in a one-to-one correspondence with parking spaces, so that after receiving a vehicle departure notification sent by any IoT device 3, the parking fee collection system can determine that a vehicle parked in a parking space corresponding to the IoT device 3 has left, and the IoT device does not need to collect a license plate number. Therefore, steps 706 and 707 are omitted for simplicity.

Step 708: The parking fee collection system determines the parking time period of the vehicle.

Step 709: The parking fee collection system initiates a payment request to the payment platform, where the payment request includes the license plate number and the parking time period/a payment amount of the related vehicle.

Step 710: The payment platform helps complete a payment operation of a parking fee based on the payment request initiated by the parking fee collection system.

Step 711: When a received payment result returned by the payment platform is that the payment succeeds, the parking fee collection system stops timing and fee collection for the parking time period of the vehicle that has left.

In an implementation, for steps 708 to 711, references can be made to steps 604 to 607 shown in FIG. 6. Details are omitted here for simplicity.

In an implementation, for the implementation shown in FIG. 7, capability verification can also be performed on a vehicle that intends to enter the parking lot through steps 401 to 403 in FIG. 4, so as to ensure that the vehicle can support the technical solution of the present specification. Details are omitted here for simplicity.

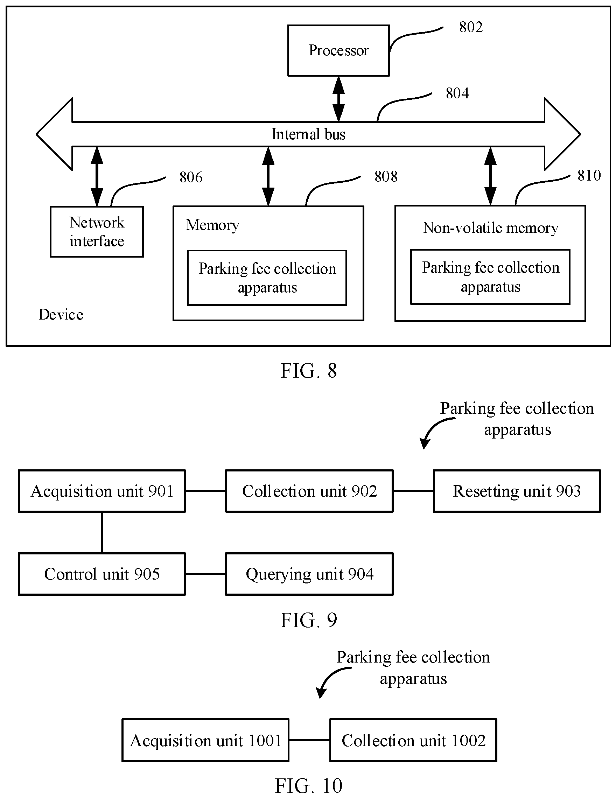

FIG. 8 is a schematic structural diagram illustrating a device, according to an example implementation. As shown in FIG. 8, in terms of hardware, the device includes a processor 802, an internal bus 804, a network interface 806, a memory 808, and a non-volatile memory 810, and certainly can further include other hardware needed by services. The processor 802 reads a corresponding computer program from the non-volatile memory 810 to the memory 808 for running, and a parking fee collection apparatus is logically formed. Certainly, in addition to software implementation, one or more implementations of the present specification do not exclude other implementations, for example, a logical device or a combination of hardware and software. In other words, an execution body of the following processing procedure is not limited to each logical unit, and can also be hardware or a logical device.

In an implementation, as shown in FIG. 9, in a software implementation, the parking fee collection apparatus can include the following: an acquisition unit 901, configured to obtain vehicle information of a parked vehicle in a parking space, where the vehicle information has a corresponding user account on a payment platform; and a collection unit 902, configured to initiate a payment collection request for the vehicle information to the payment platform each time a parking time period of the parked vehicle in the parking space reaches a first predetermined time period, to collect an asset corresponding to the first predetermined time period.

Optionally, the acquisition unit 901 is specifically configured to perform an information acquisition operation at the parking space by using a first Internet of Things device associated with the parking fee collection system; and determine the vehicle information of the parked vehicle based on information obtained by the first Internet of Things device.

Optionally, the first Internet of Things device is dedicated to the parking space; or the first Internet of Things device is used for the parking space and at least one other parking space.

Optionally, the first Internet of Things device includes at least one of the following: a monitoring device, an RFID reader, a Bluetooth device, and an optical sensor.

Optionally, the acquisition unit 901 is specifically configured to: when it is determined that there is a parked vehicle in the parking space by using the first Internet of Things device, further perform an information acquisition operation on the parked vehicle by using the first Internet of Things device; or when it is determined that there is a parked vehicle in the parking space by using a second Internet of Things device associated with the parking fee collection system, further perform an information acquisition operation on the parked vehicle by using the first Internet of Things device.

Optionally, the collection unit 902 is specifically configured to: when the parking time period of the parked vehicle in the parking space reaches the first predetermined time period, initiate the payment collection request for the vehicle information to the payment platform; and after the asset corresponding to the first predetermined time period is collected, reset the parking time period to recalculate the parking time period.

Optionally, the collected asset corresponding to the first predetermined time period comes from the user account corresponding to the vehicle information on the payment platform; or when a limit of credit of the user account is not exceeded, the collected asset corresponding to the first predetermined time period comes from a credit asset related to the user account.

Optionally, the collection unit 902 is specifically configured to count a total parking time period of the parked vehicle in a parking lot in which the parking space is located; and initiate the payment collection request to the payment platform based on a fee collection criterion corresponding to a time period range within which the total parking time period falls.

Optionally, the apparatus further includes the following: a resetting unit 903, configured to reset the total parking time period when the parked vehicle leaves the parking space; or reset the total parking time period when the parked vehicle leaves the parking space and is not parked in any parking space in the parking lot within a second predetermined time period; or reset the total parking time period when the parked vehicle leaves the parking lot.

Optionally, the apparatus further includes the following: a querying unit 904, configured to: when a vehicle travels to an entrance of a parking lot in which the parking space is located, initiate an inquiry request to the payment platform based on vehicle information of the vehicle; and a control unit 905, configured to: when it is determined that a user account corresponding to the vehicle information of the vehicle exists on the payment platform, allow the vehicle to enter, so that the vehicle enters the parking lot; otherwise, deny the vehicle to enter.

In another implementation, as shown in FIG. 10, in a software implementation, the parking fee collection apparatus can include the following: an acquisition unit 1001, configured to obtain vehicle information of a parked vehicle in a parking space, where the vehicle information has a corresponding user account on a payment platform; and a collection unit 1002, configured to: when it is detected that the parked vehicle leaves the parking space, initiate a payment collection request for the vehicle information to the payment platform based on a parking time period of the parked vehicle in the parking space, to collect an asset corresponding to the parking time period.

The system, apparatus, module, or unit illustrated in the previous implementations can be specifically implemented by using a computer chip or an entity, or can be implemented by using a product having a certain function. A typical implementation device is a computer, and the computer can be specifically a personal computer, a laptop computer, a cellular phone, a camera phone, a smartphone, a personal digital assistant, a media player, a navigation device, an email receiving and sending device, a game console, a tablet, a wearable device, or any combination of these devices.

In a typical configuration, a computer includes one or more processors (CPU), an input/output interface, a network interface, and a memory.

The memory can include a non-persistent memory, a random access memory (RAM), a non-volatile memory, and/or another form that are in a computer readable medium, for example, a read-only memory (ROM) or a flash memory (flash RAM). The memory is an example of the computer readable medium.

The computer readable medium includes persistent, non-persistent, movable, and unmovable media that can store information by using any method or technology. The information can be a computer readable instruction, a data structure, a program module, or other data. Examples of the computer storage medium include but are not limited to a phase change random access memory (PRAM), a static RAM (SRAM), a dynamic RAM (DRAM), a RAM of another type, a read-only memory (ROM), an electrically erasable programmable ROM (EEPROM), a flash memory or another memory technology, a compact disc ROM (CD-ROM), a digital versatile disc (DVD), or another optical storage, a cassette, a magnetic disk storage, a quantum memory, a grapheme-based storage medium, or another magnetic storage device or any other non-transmission medium. The computer storage medium can be configured to store information that can be accessed by a computing device. Based on the definition in the present specification, the computer readable medium does not include transitory media such as a modulated data signal and carrier.

It is worthwhile to further note that, the terms "include", "contain", or their any other variants are intended to cover a non-exclusive inclusion, so a process, a method, a product or a device that includes a list of elements not only includes those elements but also includes other elements which are not expressly listed, or further includes elements inherent to such process, method, product or device. Without more constraints, an element preceded by "includes a ..." does not preclude the existence of additional identical elements in the process, method, product or device that includes the element.

Specific implementations of the present specification are described above. Other implementations fall within the scope of the appended claims. In some situations, the actions or steps described in the claims can be performed in an order different from the order in the implementations and the desired results can still be achieved. In addition, the process depicted in the accompanying drawings does not necessarily need a particular execution order to achieve the desired results. In some implementations, multi-tasking and concurrent processing is feasible or can be advantageous.

Terms used in one or more implementations of the present specification are merely used to describe specific implementations, and are not intended to limit the one or more implementations of the present specification. The terms "a" and "the" of singular forms used in one or more implementations of the present specification and the appended claims are also intended to include plural forms, unless otherwise specified in the context clearly. It should be further understood that the term "and/or" used in the present specification indicates and includes any or all possible combinations of one or more associated listed items.

It should be understood that although terms "first", "second", "third", etc. can be used in one or more implementations of the present specification to describe various types of information, the information is not limited to these terms. These terms are only used to differentiate between information of the same type. For example, without departing from the scope of one or more implementations of the present specification, first information can also be referred to as second information, and similarly, the second information can be referred to as the first information. Depending on the context, for example, the word "if" used here can be explained as "while", "when", or "in response to determining".

The previous descriptions are only example implementations of one or more implementations of the present specification, but are not intended to limit the one or more implementations of the present specification. Any modification, equivalent replacement, improvement, etc. made without departing from the spirit and principle of the one or more implementations of the present specification shall fall within the protection scope of the one or more implementations of the present specification.

## Claims

1. A parking fee collection method, applied to a parking fee collection system, wherein the method comprises:
obtaining vehicle information of a parked vehicle in a parking space, wherein the vehicle information has a corresponding user account on a payment platform; and
initiating a payment collection request for the vehicle information to the payment platform each time a parking time period of the parked vehicle in the parking space reaches a first predetermined time period, to collect an asset corresponding to the first predetermined time period.

2. The method according to claim 1, wherein the obtaining vehicle information of a parked vehicle in a parking space comprises:
performing an information acquisition operation at the parking space by using a first Internet of Things device associated with the parking fee collection system; and
determining the vehicle information of the parked vehicle based on information obtained by the first Internet of Things device.

3. The method according to claim 2, wherein the first Internet of Things device is dedicated to the parking space; or the first Internet of Things device is used for the parking space and at least one other parking space.

4. The method according to claim 2, wherein the first Internet of Things device comprises at least one of the following: a monitoring device, an RFID reader, a Bluetooth device, an optical sensor, and a signal receiver.

5. The method according to claim 2, wherein the performing an information acquisition operation at the parking space by using a first Internet of Things device associated with the parking fee collection system comprises:
when it is determined that there is a parked vehicle in the parking space by using the first Internet of Things device, further performing an information acquisition operation on the parked vehicle by using the first Internet of Things device; or
when it is determined that there is a parked vehicle in the parking space by using a second Internet of Things device associated with the parking fee collection system, further performing an information acquisition operation on the parked vehicle by using the first Internet of Things device.

6. The method according to claim 1, wherein the initiating a payment collection request for the vehicle information to the payment platform each time a parking time period of the parked vehicle in the parking space reaches a first predetermined time period, to collect an asset corresponding to the first predetermined time period comprises:
when the parking time period of the parked vehicle in the parking space reaches the first predetermined time period, initiating the payment collection request for the vehicle information to the payment platform; and
after the asset corresponding to the first predetermined time period is collected, resetting the parking time period to recalculate the parking time period.

7. The method according to claim 1, wherein the collected asset corresponding to the first predetermined time period comes from the user account corresponding to the vehicle information on the payment platform; or when a limit of credit of the user account is not exceeded, the collected asset corresponding to the first predetermined time period comes from a credit asset related to the user account.

8. The method according to claim 1, wherein the initiating a payment collection request for the vehicle information to the payment platform comprises:
counting a total parking time period of the parked vehicle in a parking lot in which the parking space is located; and
initiating the payment collection request to the payment platform based on a fee collection criterion corresponding to a time period range within which the total parking time period falls.

9. The method according to claim 8, further comprising:
resetting the total parking time period when the parked vehicle leaves the parking space; or
resetting the total parking time period when the parked vehicle leaves the parking space and is not parked in any parking space in the parking lot within a second predetermined time period; or
resetting the total parking time period when the parked vehicle leaves the parking lot.

10. The method according to claim 1, further comprising:
when a vehicle travels to an entrance of a parking lot in which the parking space is located, initiating an inquiry request to the payment platform based on vehicle information of the vehicle; and
when it is determined that a user account corresponding to the vehicle information of the vehicle exists on the payment platform, allowing the vehicle to enter, so that the vehicle enters the parking lot; otherwise, denies the vehicle to enter.

11. A parking fee collection method, applied to a parking fee collection system, wherein the method comprises:
obtaining vehicle information of a parked vehicle in a parking space, wherein the vehicle information has a corresponding user account on a payment platform; and
when it is detected that the parked vehicle leaves the parking space, initiating a payment collection request for the vehicle information to the payment platform based on a parking time period of the parked vehicle in the parking space, to collect an asset corresponding to the parking time period.

12. A parking fee collection apparatus, applied to a parking fee collection system, wherein the apparatus comprises:
an acquisition unit, configured to obtain vehicle information of a parked vehicle in a parking space, wherein the vehicle information has a corresponding user account on a payment platform; and
a collection unit, configured to initiate a payment collection request for the vehicle information to the payment platform each time a parking time period of the parked vehicle in the parking space reaches a first predetermined time period, to collect an asset corresponding to the first predetermined time period.

13. The apparatus according to claim 12, wherein the acquisition unit is specifically configured to:
perform an information acquisition operation at the parking space by using a first Internet of Things device associated with the parking fee collection system; and
determine the vehicle information of the parked vehicle based on information obtained by the first Internet of Things device.

14. The apparatus according to claim 13, wherein the first Internet of Things device is dedicated to the parking space; or the first Internet of Things device is used for the parking space and at least one other parking space.

15. The apparatus according to claim 13, wherein the first Internet of Things device comprises at least one of the following: a monitoring device, an RFID reader, a Bluetooth device, and an optical sensor.

16. The apparatus according to claim 13, wherein the acquisition unit is specifically configured to:
when it is determined that there is a parked vehicle in the parking space by using the first Internet of Things device, further perform an information acquisition operation on the parked vehicle by using the first Internet of Things device; or
when it is determined that there is a parked vehicle in the parking space by using a second Internet of Things device associated with the parking fee collection system, further perform an information acquisition operation on the parked vehicle by using the first Internet of Things device.

17. The apparatus according to claim 12, wherein the collection unit is specifically configured to:
when the parking time period of the parked vehicle in the parking space reaches the first predetermined time period, initiate the payment collection request for the vehicle information to the payment platform; and
after the asset corresponding to the first predetermined time period is collected, reset the parking time period to recalculate the parking time period.

18. The apparatus according to claim 12, wherein the collected asset corresponding to the first predetermined time period comes from the user account corresponding to the vehicle information on the payment platform; or when a limit of credit of the user account is not exceeded, the collected asset corresponding to the first predetermined time period comes from a credit asset related to the user account.

19. The apparatus according to claim 12, wherein the collection unit is specifically configured to:
count a total parking time period of the parked vehicle in a parking lot in which the parking space is located; and
initiate the payment collection request to the payment platform based on a fee collection criterion corresponding to a time period range within which the total parking time period falls.

20. The apparatus according to claim 19, further comprising:
a resetting unit, configured to reset the total parking time period when the parked vehicle leaves the parking space; or reset the total parking time period when the parked vehicle leaves the parking space and is not parked in any parking space in the parking lot within a second predetermined time period; or reset the total parking time period when the parked vehicle leaves the parking lot.

21. The apparatus according to claim 12, further comprising:
a querying unit, configured to: when a vehicle travels to an entrance of a parking lot in which the parking space is located, initiate an inquiry request to the payment platform based on vehicle information of the vehicle; and
a control unit, configured to: when it is determined that a user account corresponding to the vehicle information of the vehicle exists on the payment platform, allow the vehicle to enter, so that the vehicle enters the parking lot; otherwise, deny the vehicle to enter.

22. A parking fee collection apparatus, applied to a parking fee collection system, wherein the apparatus comprises:
an acquisition unit, configured to obtain vehicle information of a parked vehicle in a parking space, wherein the vehicle information has a corresponding user account on a payment platform; and
a collection unit, configured to: when it is detected that the parked vehicle leaves the parking space, initiate a payment collection request for the vehicle information to the payment platform based on a parking time period of the parked vehicle in the parking space, to collect an asset corresponding to the parking time period.

23. An electronic device, comprising:
a processor; and
a memory, configured to store a processor-executable instruction, wherein
the processor is configured to perform the method according to any one of claims 1 to 11.
